# EUROPÄISCHE PATENTSCHRIFT

(11) **EP 1 388 685 B1**
(45) Veröffentlichungstag und Bekanntmachung des Hinweises auf die Patenterteilung: **21.01.2009**
(21) Anmeldenummer: 03015063.5
(22) Anmeldetag: 03.07.2003
(51) Int. Cl.: F16H 3/093

(54) **Antriebsstrang und Verfahren zum Montieren eines Antriebsstranges**
Drivetrain and method for assembling a drivetrain
Train d'entraînement et procédé d'assemblage du train d'entraînement

(30) Priorität: 09.08.2002 DE 10237424
(43) Veröffentlichungstag der Anmeldung: 11.02.2004
(73) Patentinhaber: GETRAG Getriebe- und Zahnradfabrik Hermann Hagenmeyer GmbH & Cie KG, 74199 Untergruppenbach (DE)
(72) Erfinder: Helms, Georg, 74391 Erligheim (DE); Neumann, Manfred, 74395 Mundelsheim (DE)
(74) Vertreter: Steil, Christian

(56) Entgegenhaltungen:
- EP-A1- 0 537 817
- FR-A1- 2 772 451
- US-A- 4 412 705
- US-A- 5 832 789
- US-B1- 6 200 241

## Beschreibung

Die vorliegende Erfindung betrifft einen Antriebsstrang mit einem zweiteiligen Gehäuse, das ein Getriebgehäuse und ein weiteres Gehäuse aufweist, zwischen denen eine einzelne Dichtfläche ausgebildet ist, wobei das Gehäuse zur Aufnahme eines Stirnradgetriebes und eines Differentials dient, das einen Zahnkranz aufweist, der mit einem Ritzel einer Abtriebswelle des Stirnradgetriebes kämmt, wobei ein dem Ritzel zugeordnetes Lager der Abtriebswelle und ein dem Zahnkranz des Differentials zugeordnetes Lager an einer Lagerplatte festgelegt sind, die innerhalb des Getriebgehäuses montiert ist. Ferner betrifft die vorliegende Erfindung ein Verfahren zum Montieren eines derartigen Antriebsstranges.

Ein Antriebsstrang wurde unter der Typenbezeichnung 440 von der Anmelderin hergestellt.

Antriebsstränge für den Frontquereinbau werden heute standardmäßig bei Personenkraftwagen mit Frontantrieb oder Allradantrieb sowie bei leichten Nutzfahrzeugen verwendet. Dabei treten die höchsten Belastungen im Zahneingriff des sogenannten "Final Drive" auf, also zwischen dem Ritzel der Abtriebswelle des Stirnradgetriebes und dem Zahnkranz des Differentials. Bei mehrwelligen Getrieben sind zwei oder mehr Wellen des Stirnradgetriebes als Getriebeabtriebswellen ausgebildet, so daß eine entsprechende Anzahl von Ritzeln mit dem Zahnkranz im Zahneingriff steht. Bei manchen Allradfahrzeugen mit einem Antriebsstrang in Frontqueranordnung kämmt das Ritzel (bzw. kämmen die Ritzel) mit einem Zahnkranz eines sogenannten "Final Drive Carriers".

Die aufgrund des Übersetzungsverhältnisses hohen Belastungen im Zahneingriff werden unter anderem über die Differentiallager sowie ein dem Ritzel (den Ritzeln) zugeordnetes Lager der Getriebeabtriebswelle(n) in das Gehäuse eingeleitet.

Aus Gründen eines möglichst kompakten Aufbaus ist der Zahnkranz des Differentials in der Regel etwas versetzt (z.B. in Fahrtrichtung nach links) gegenüber einer Mittenebene des Differentials angeordnet. Demzufolge ist das dem Zahnkranz zugeordnete Lager (z.B. das in Fahrtrichtung links sitzende Differentiallager) am höchsten belastet. Dies hat zur Folge, daß sich das Gehäuse dort stark ausbiegen will.

Die andere Kraft des Kräftepaares in der Verzahnung wird über das dem Ritzel zugeordnete Lager der Getriebeabtriebswelle ins Gehäuse geleitet.

Bei dem oben genannten Getriebe 440 der Anmelderin ist das Getriebegehäuse zweiteilig ausgebildet, mit einem ersten als Getriebegehäuse ausgebildeten Teil und einem zweiten als Kupplungsgehäuse ausgebildeten Teil. Das dem Zahnkranz des Differentials zugeordnete Lager sowie ein dem Ritzel der Getriebeabtriebswelle zugeordnetes Ritzellager sind an dem Getriebegehäuse festgelegt. Das Ritzellager ist auf der einen Seite des Ritzels angeordnet. Ferner ist noch ein weiteres, dem Ritzel zugeordnetes Lager vorgesehen, das an dem Kupplungsgehäuse festgelegt ist. Durch diese konstruktiv aufwendige Doppellagerung werden die hohen Belastungen aufgenommen.

Bei einer weiteren Vielzahl von Getrieben, wie sie beispielsweise bekannt sind aus J. Looman, Zahnradgetriebe, Grundlagen, Konstruktionen, Anwendungen in Fahrzeugen, 3. Auflage, 1996, insbesondere Abb. 6.40 (Porsche-Aisin-Getriebe), 6.28 (Ford-Getriebe), 6.29 (Ford-Allradgetriebe) und 6.21 (VW-Getriebe), ist das dem Zahnkranz zugeordnete Lager an dem Getriebegehäuse festgelegt und das dem Ritzel zugeordnete Lager an dem Kupplungsgehäuse. Im Falle des VW-Getriebes ist dem Ritzel wiederum ein zweites Lager zugeordnet, das an einer separaten Lagerplatte festgelegt ist.

Bei dieser Art von Getriebekonstruktion sind die beiden Lagerstellen über die Gehäuseteile sehr indirekt verbunden, mit entsprechender Weichheit. Das führt bei Vollast und insbesondere bei Mißbrauch zu einem starken Verkippen zwischen Ritzel und Zahnkranz, verbunden mit einer radialen Verlagerung des Zahnkranzes relativ zum Ritzel.

Derartige Konstruktionen sind bei drehmomentstarken Anwendungen konstruktiv folglich nicht einfach zu beherrschen. So müssen die Getriebegehäuseteile häufig aus hochfesten und steifen Materialien hergestellt werden, was entsprechende Kosten und Gewichte mit sich bringt. Ferner bedingen diese Konstruktionen im Hinblick auf die Montage häufig, daß das Gehäuse aus mehr als zwei Teilen zu bestehen hat. Dies wiederum führt zu mehr als einer Dichtfläche.

Bei anderen Antriebssträngen (z.B. Opel F16) ist eine ins Gehäuse integrierte Wand als Lagerträger ausgebildet. Das Gehäuse ist jedoch im Differentialbereich radial offen, so daß ein separater Deckel notwendig ist. Wenn dabei das dem Zahnkranz zugeordnete Lager und das dem Ritzel zugeordnete Lager direkt aneinander gebunden sind, ist zwar der Zahneingriff in der Regel stabil, die zur Montage des Differentials erforderliche Öffnung des Gehäuses schwächt dieses jedoch insgesamt.

Aus der US 5,832,789 ist ein Motorgehäuse, das einen Motor enthält, bekannt, das eine Stirnwand aufweist mit Naben und Bolzenaufnahmelöchern, die radial innen liegend relativ zu einem Stator positioniert sind, der in einer umfänglichen Wand des Motorgehäuses montiert ist. Eine Getriebeeinheit mit einem Getriebegehäuse beinhaltet Naben und Bolzenlöcher auf seiner Außenseite, die in Naben und Stiftaufnahmelöchem des Motorgehäuses eingreifen, um dadurch eine wesentliche Verringerung der Größe und des Gewichts des Getriebegehäuses zu ermöglichen.

Aus der EP 0 537 817 A1, die als nächstliegender Stand der Technik gegenüber den unabhängigen Ansprüchen 1 und 6 angesehen wird, ist ein Antriebsstrang bekannt, der ein endseitig offenes Getriebegehäuse zur Aufnahme eines Stirnradgetriebes aufweist. Ein Differential schließt sich axial an das Stufengetriebe an und ist in einem Differentialgehäuse aufgenommen, das als Getriebegehäusedeckel ausgebildet ist. Eine Abtriebswelle des Differentials erstreckt sich aus dem Differentialgehäuse heraus. Die andere Abtriebswelle erstreckt sich durch eine als Hohlwelle ausgebildete Getriebeeingangswelle hindurch zur axial anderen Seite des Getriebegehäuses und tritt dort aus einem angeflanschten Kupplungsgehäuse aus.

Vor diesem Hintergrund besteht das der Erfindung zugrunde liegende Problem darin, einen verbesserten Antriebsstrang der gattungsgemäßen Art anzugeben, der bei geringen Kosten eine hohe Steifigkeit auch bei hohen Belastungen aufweist, sowie ein Verfahren zum Montieren eines solchen Antriebsstranges anzugeben.

Diese Aufgabe wird bei dem eingangs genannten Antriebsstrang dadurch gelöst, daß das Getriebegehäuse als ein endseitig geschlossenes Topfgehäuse ausgebildet ist, in dem das Stirnradgetriebe aufgenommen ist.

Durch diese Maßnahme ist zum einen gewährleistet, daß die beiden Lager an demselben Bauteil festgelegt sind und insofern auch hohe Belastungen (insbesondere bei Mißbrauch) nicht zu einer Verlagerung des Eingriffs zwischen Ritzel und Zahnkranz führen. Zudem ist es möglich, die für die jeweilige Konstruktion geltenden Grenzbelastungen durch geeignete Wahl des Materials des separaten Bauteils einzuhalten. Das Getriebegehäuse selbst kann demgemäß in der Regel aus kostengünstigeren Materialien bzw. durch kostengünstigere Prozesse hergestellt werden. Die für das Getriebegehäuse auswählbaren Materialien können in der Regel Leichtmaterialien sein. Dadurch, dass das Getriebgehäuse ein endseitig geschlossenes Topfgehäuse ist, weist das Gehäuse insgesamt eine hohe Steifigkeit auf.

Bauteile zur Verbindung von Lagerstellen sind im Getriebebau zwar an sich bekannt, beispielsweise als Zwischenplatten bei axial langbauenden Getrieben. Dort verhindern diese Bauteile eine relative Durchbiegung der jeweiligen Wellen. Bislang ging man jedoch davon aus, daß eine unmittelbare Lagerung des Differentials am Gehäuse aus Montage- und Festigkeitsgründen günstiger ist.

Ferner wird die obige Aufgabe gelöst durch ein Verfahren zum Montieren eines Antriebsstranges, der ein Stirnradgetriebe, eine Anfahr- und Trennkupplung, ein Differential mit einem Zahnkranz sowie ein zweiteiliges Gehäuse, das ein Getriebgehäuse und ein weiteres Gehäuse aufweist, mit den Schritten:
- Bereitstellen des endseitig geschlossenen Getriebegehäuses;
- axiales Montieren des Stirnradgetriebes in dem Getriebegehäuse;
- Montieren einer Lagerplatte in dem Getriebegehäuse, an dem sowohl ein Lager für den Zahnkranz des Differentials als auch wenigstens ein Lager für eine Abtriebswelle des Stirnradgetriebes angeordnet ist;
- axiales Montieren des Differentials und wenigstens eines Ritzels, das mit dem Zahnkranz in Eingriff steht in dem Getriebegehäuse; und
- Festlegen des weiteren Gehäuses an dem Getriebegehäuse entlang einer einzelnen Dichtfläche.

Durch das erfindungsgemäße Verfahren ist die Montage des Antriebsstranges automatisierbar und bei geringen Kosten durchzuführen. Sämtliche wesentlichen Montageschritte können in einer einzigen Richtung, nämlich in axialer Richtung erfolgen. Ferner ist das Gehäuse rein zweiteilig ausgebildet, so daß nur eine einzelne Dichtfläche vorhanden ist. Insbesondere ist es bei dieses erfindungsgemäßen Montageverfahrens nicht notwendig, axiale oder radiale Gehäusedeckel vorzusehen.

Gemäß einer weiteren bevorzugten Ausführungsform liegen die zwei Lager an der Lagerplatte in einer Ebene, die etwa senkrecht zu der Abtriebswelle des Stirnradgetriebes verläuft.

Durch diese Maßnahme ist es möglich, die Lagerplatte geradlinig auszubilden, ohne Kröpfungen oder dergleichen, so daß sich bei geringem Materialaufwand und geringem Herstellungsaufwand eine hohe Festigkeit der Lagerplatte erzielen läßt.

Ferner ist es bevorzugt, wenn die Lagerplatte wenigstens eine weitere Lagerstelle zum Festlegen eines Lagers für eine weitere Welle des Stirnradgetriebes aufweist.

Durch diese Maßnahme ist es möglich, das Gehäuse weiter zu vereinfachen. Insbesondere sind an dem Gehäuse keine komplizierten Querwände vorzusehen, die die axiale Montierbarkeit von der offenen Seite des Getriebegehäuses behindern.

Auch ist es von Vorteil, wenn die Lagerplatte in Längsrichtung des Stirnradgetriebes gesehen zwischen dem Differential und dem Stirnradgetriebe angeordnet ist.

Hierdurch läßt sich die Lagerplatte nach dem Montieren des Stirnradgetriebes in dem Getriebegehäuse und vor dem Montieren des Differentials leicht an dem Getriebegehäuse montieren.

Dabei ist es von besonderem Vorzug, wenn das Differential in dem Getriebegehäuse aufgenommen ist.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung in Form einer Abwicklung einer Ausführungsform eines erfindungsgemäßen Antriebsstranges; und
- Fig. 2: eine Schnittansicht einer weiteren Ausführungsform des erfindungsgemäßen Antriebsstranges, wobei aus Übersichtlichkeitsgründen der Aufbau des Stufengetriebes im einzelnen nicht dargestellt ist.

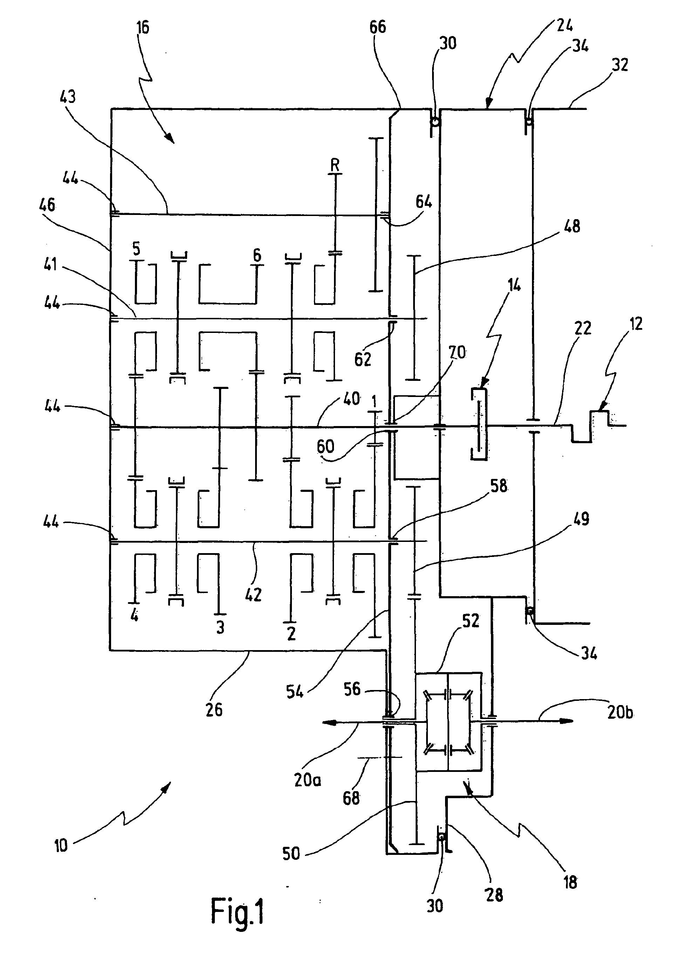

In Fig. 1 ist ein erfindungsgemäßer Antriebsstrang generell mit 10 bezeichnet. Der Antriebsstrang 10 ist ausgelegt für den Frontquereinbau in ein Kraftfahrzeug, insbesondere einen Personenkraftwagen oder ein leichtes Nutzfahrzeug.

Der Antriebsstrang 10 weist einen Verbrennungsmotor 12, eine Anfahr- und Trennkupplung 14, ein Stirnradgetriebe 16 sowie ein Differential 18 auf. Von dem Differential 18 gehen zwei Abtriebswellen 20a, 20b ab, die mit angetriebenen Rädern des Fahrzeugs zu verbinden sind.

Eine Motorabtriebswelle 22 des Verbrennungsmotors 12 ist mit einem nicht näher bezeichneten Eingangsglied der Anfahr- und Trennkupplung 14 verbunden.

Der Antriebsstrang 10 weist ferner ein Gehäuse 24 auf, das ein erstes Gehäuseteil in Form eines Getriebegehäuses 26 und ein zweites Gehäuseteil in Form eines Kupplungsgehäuses 28 aufweist. Die zwei Gehäuseteile 26, 28 sind über eine einzelne Dichtfläche 30 miteinander verbunden.

Das Kupplungsgehäuse 28 ist über eine weitere Fläche 34 mit einem schematisch angedeuteten Motorgehäuse 32 verbunden.

Die Anfahr- und Trennkupplung 14 ist in dem durch das Kupplungsgehäuse 28 und das Motorgehäuse 32 definierten Raum angeordnet.

Das Stirnradgetriebe 16 und das Differential 18 sind in dem Raum angeordnet, der durch das Getriebegehäuse 26 und das Kupplungsgehäuse 28 definiert ist.

Ein nicht näher bezeichnetes Ausgangsglied der Anfahr- und Trennkupplung 14 ist mit einer Getriebeeingangswelle 40 verbunden, die durch das Kupplungsgehäuse 28 hindurch tritt.

Es versteht sich, daß am Ort des Durchtritts in der Regel eine Wellendichtung vorgesehen ist.

Das Stirnradgetriebe 16 weist parallel zu der Getriebeeingangswelle 40 eine erste Getriebeabtriebswelle 41 und eine zweite Getriebeabtriebswelle 42 sowie eine Nebenwelle 43 auf.

In an sich herkömmlicher Weise sind an den Wellen 40 - 43 Stirnradsätze und Schaltkupplungen für Vorwärtsgänge 1 - 6 sowie einen Rückwärtsgang R angeordnet.

Das Getriebegehäuse 26 ist als endseitig geschlossenes Topfgehäuse ausgebildet. An einem Endbereich 46 des Getriebegehäuses 26, der als Boden des Topfes ausgebildet ist, sind eine Mehrzahl von Lagerstellen 44 zum Lagern von Enden der Wellen 40 - 43 vorgesehen.

Die erste Getriebeabtriebswelle 41 ist drehfest mit einem Ritzel 48 verbunden. Die zweite Getriebeabtriebswelle 42 ist drehfest mit einem zweiten Ritzel 49 verbunden. Die Ritzel 48, 49 liegen in einer gemeinsamen Ebene quer zu den Achsen 40 - 43.

Die Ritzel 48, 49 kämmen jeweils mit einem Zahnkranz 50 des Differentials 18.

Der Zahnkranz 50 ist an einem Differentialgehäuse 52 des Differentials 18 festgelegt oder einstückig hiermit ausgebildet.

Der Zahnkranz 50 ist asymmetrisch in bezug auf eine quer zu den Achsen 40 - 43 verlaufende Mittelebene des Differentials 18 angeordnet, derart, daß der Zahnkranz 50 näher bei der einen Abtriebswelle 20a angeordnet ist als bei der anderen Abtriebswelle 20b.

In dem Getriebegehäuse 46 ist ferner eine Lagerplatte 54 festgelegt, die quer zu den Achsen 40 - 43 ausgerichtet ist.

An der Lagerplatte 54 ist ein Lager 56 für das Differential 18 festgelegt, wobei das Lager 56 benachbart zu dem Zahnkranz 50 angeordnet ist.

Ferner sind an der Lagerplatte 54 ein Lager 58 für die zweite Getriebeabtriebswelle 42, ein Lager 60 für die Getriebeeingangswelle 40, ein Lager 62 für die erste Getriebeabtriebswelle 41 sowie ein Lager 64 für die Nebenwelle 43 festgelegt.

Die Lagerplatte 54 ist an mehreren Befestigungsstellen an dem Getriebegehäuse 26 festgelegt, wie es schematisch bei 66 und 68 angedeutet ist. Ferner ist die Lagerplatte 54 an dem Kupplungsgehäuse 28 festgelegt, wie es schematisch bei 70 angedeutet ist.

Die Radsätze und Schaltkupplungen des Stirnradgetriebes 16 sind zwischen dem Endbereich 46 des Getriebegehäuses 26 und der Lagerplatte 54 angeordnet. Die Ritzel 48, 49 sind zwischen der Lagerplatte 54 und dem Kupplungsgehäuse 28 angeordnet.

Die Lager 62, 58 der Getriebeabtriebswellen 41, 42 sind in unmittelbarer Nachbarschaft zu den Ritzeln 48, 49 vorgesehen.

Durch die Tatsache, daß das dem Zahnkranz 50 zugeordnete Lager 56 des Differentials 18 und die den Ritzeln 48, 49 zugeordneten Lager 58, 62 durch ein und dasselbe Bauteil gelagert werden, ergibt sich eine steife Verbindung zwischen diesen Lagern. Demzufolge können die Zahneingriffe zwischen den Ritzeln 48, 49 und dem Zahnkranz 50 hohe Belastungen aufnehmen, ohne die Gefahr, daß sich der Eingriff zwischen den Ritzeln 48, 49 und dem Zahnkranz 50 verlagert. Es sind Gesamtübersetzungen im ersten Gang von ca. 20 und mehr darstellbar.

Dadurch, daß derartige Verlagerungen im Eingriff zwischen den Ritzeln 48, 49 und dem Zahnkranz 50 vermieden werden, ist die Gefahr von Geräuschanstieg, Zahnverformungen, Zahnanriß, Zahnbruch oder Gehäusebruch verringert. Ein stabiler Zahneingriff ist sichergestellt.

Da die Lagerplatte 54 separat von dem Gehäuse 24 bereitgestellt ist, kann die Lagerplatte aus einem anderen Werkstoff als das Gehäuse hergestellt sein.

Das Gehäuse 24 besteht lediglich aus zwei Teilen, dem Getriebegehäuse 26 und dem Kupplungsgehäuse 28. Demzufolge weist das Gehäuse 24 nur eine Dichtfläche 30 auf (neben der ohnehin immer vorhandenen Dichtfläche 34).

Insbesondere ist im Differentialbereich kein separater Deckel notwendig.

Die für Vollast und Mißbrauch erforderliche Verzahnungs-Korrektur ist nicht wesentlich verschieden von der für Teillast aus Geräuschgründen erforderlichen Auslegung.

Es läßt sich eine günstige konstruktive Ausführung des Gehäuses bei hoher Steifigkeit realisieren.

Obgleich es für die erfindungsgemäßen Vorteile hinreichend wäre, wenn die Lagerplatte 54 die Lager 56, 62 und 58 für den Zahnkranz 50 sowie für die Wellen 41, 42 benachbart zu den Ritzeln 48, 49 aufnimmt, ist bei der dargestellten bevorzugten Ausführungsform auch eine Festlegung der Lager 60, 64 der weiteren Wellen (Getriebeeingangswelle 40 und Nebenwelle 43) realisiert.

Ferner könnten auch für Schaltstangen Lagerstellen in der Lagerplatte 54 vorgesehen sein, obgleich dies nicht dargestellt ist.

Durch die Festlegung der Lagerplatte 54 an dem Getriebegehäuse wird das Getriebegehäuse 26 zusätzlich versteift.

Obgleich das Stirnradgetriebe 16 in der dargestellten Ausführungsform als Dreiwellengetriebe zuzüglich Nebenwelle (Rücklaufwelle) ausgebildet ist, versteht sich, daß die vorliegende Erfindung auch auf solche Antriebsstränge anwendbar ist, bei denen das Stirnradgetriebe lediglich zwei Wellen oder mehr als drei Wellen aufweist.

Die Lagerplatte 54 kann, je nach Anwendung, aus Gußeisen, Stahl, Aluminium, Magnesium oder Kombinationen hiervon hergestellt sein. Das Gehäuse kann aus einem beliebigen Werkstoff hergestellt sein, ist jedoch bevorzugt aus einem Leichtbauwerkstoff wie Aluminium, Magnesium oder ähnliches hergestellt.

Der Antriebsstrang 10 läßt sich besonders einfach und kostengünstig montieren.

Hierbei wird zunächst das Getriebegehäuse 26 bereitgestellt. Anschließend werden die Wellen 40 - 43 mit den zugeordneten Radsätzen und Schaltkupplungen in die Lagerstellen 44 des Endbereiches 46 eingesetzt. Anschließend wird die Lagerplatte 54 montiert, so daß das Strinradgetriebe 16 weitgehend fertig montiert ist. Anschließend werden auf überstehende Enden der Abtriebswellen 41, 42 die Ritzel 48, 49 drehfest aufgesetzt, und das Differential 18 wird in das Lager 56 eingesetzt. Anschließend wird das Kupplungsgehäuse 28 aufgesetzt, wobei das Kupplungsgehäuse 28 mit dem Getriebegehäuse 26 verbunden wird. Vorzugsweise ist an dem Kupplungsgehäuse 28 ein weiteres Lager für das Differential 18 festgelegt.

Dadurch, daß die Montage ausschließlich in axialer Richtung erfolgt, kann die Montage automatisiert durchgeführt werden.

Das so fertig montierte Getriebe 16 kann dann an dem Verbrennungsmotor 12 angeflanscht werden, an dem die Anfahr- und Trennkupplung 14 sitzt.

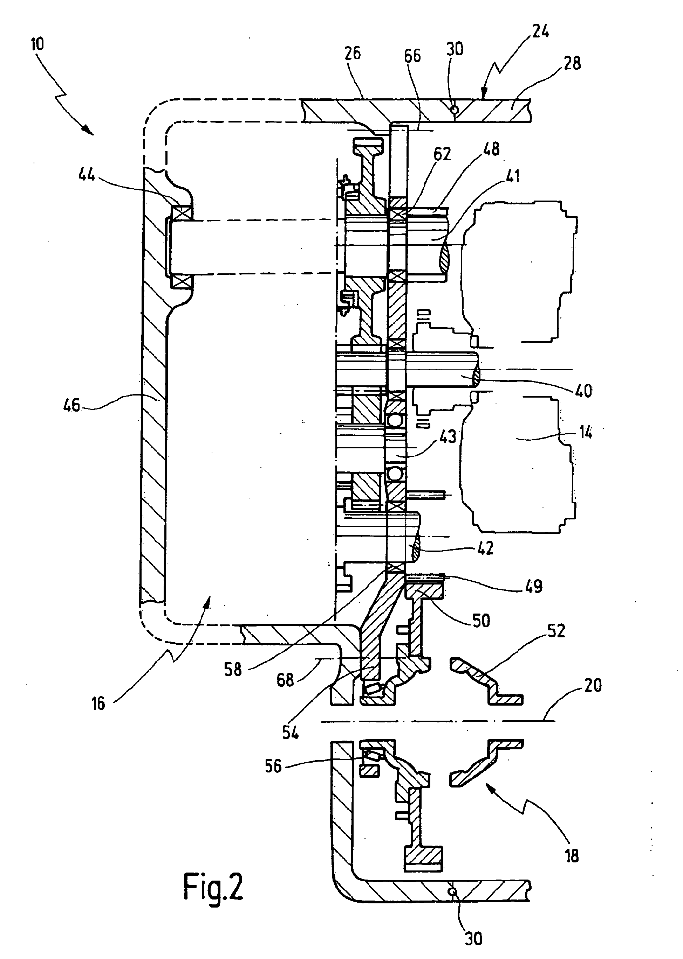

Fig. 2 zeigt eine weitere Ausführungsform des erfindungsgemäßen Antriebsstranges 10 in einer tatsächlich realisierten Konstruktion.

Aus Gründen einer einfachen Darstellung wurde darauf verzichtet, sämtliche Radsätze des Stirnradgetriebes 16 darzustellen. Ferner ist zum Zwecke einer einfachen Darstellung lediglich eine Lagerstelle 44 für die erste Getriebeabtriebswelle 41 in dem Endbereich 46 des Getriebegehäuses 26 gezeigt.

Im Folgenden wird lediglich auf die Unterschiede zu der Ausführungsform der Fig. 1 eingegangen.

So ist bei der dargestellten Ausführungsform die Lagerplatte 54 gekröpft ausgebildet, wobei die Lager 62, 58 für die Wellen 41, 42 in einer Ebene liegen und das Lager 56, das dem Zahnkranz 50 des Differentials 18 zugeordnet ist, in einer Ebene parallel hierzu. Ferner ist bei diese Ausführungsform keine Verbindung zwischen der Lagerplatte 54 und dem Kupplungsgehäuse 28 vorgesehen.

Obgleich die Ritzel 48, 49 in der dargestellten Ausführungsform mit einem Zahnkranz 50 eines Differentials 18 kämmen, ist es insbesondere bei Allradfahrzeugen auch möglich, daß das Ritzel oder die Ritzel 48, 49 mit einem "Final Drive Carrier" kämmen.

Der Begriff des Differentials soll im vorliegenden Zusammenhang sowohl herkömmliche Differentiale als auch derartige "Final Drive Carrier" bei Allradfahrzeugen umfassen.

Ferner versteht sich, daß die Erfindung auch in Verbindung mit Getrieben Anwendung finden kann, die nur eine einzelne Abtriebswelle aufweisen.

## Patentansprüche

1. Antriebsstrang (10), insbesondere für den Frontquereinbau in Kraftfahrzeugen, mit einem zweiteiligen Gehäuse (24), das ein Getriebegehäuse (26) und ein weiteres Gehäuse aufweist, zwischen denen eine einzelne Dichtfläche ausgebildet ist, wobei das Gehäuse (24) zur Aufnahme eines Stirnradgetriebes (16) und eines Differentials (18) dient, das einen Zahnkranz (50) aufweist, der mit wenigstens einem Ritzel (48, 49) einer Abtriebswelle (41, 42) des Stirnradgetriebes (16) kämmt, wobei ein dem Ritzel (48, 49) zugeordnetes Lager (58, 62) der Abtriebswelle (41, 42) und ein dem Zahnkranz (50) des Differentials (18) zugeordnetes Lager (56) an einer Lagerplatte (54) festgelegt sind, die innerhalb des Getriebegehäuses (26) montiert ist,
**dadurch gekennzeichnet, daß**
das Getriebegehäuse (26) als ein endseitig geschlossenes Topfgehäuse (26) ausgebildet ist, in dem das Stirnradgetriebe aufgenommen ist.

2. Antriebsstrang nach Anspruch 1, **dadurch gekennzeichnet, daß** die zwei Lager (58, 62 bzw. 56) an der Lagerplatte (54) in einer Ebene liegen, die etwa senkrecht zu der Abtriebswelle (41, 42) des Stirnradgetriebes (16) verläuft.

3. Antriebsstrang nach Anspruch 1 oder 2, **dadurch gekennzeichnet, daß** die Lagerplatte (54) wenigstens eine weitere Lagerstelle zum Festlegen eines Lagers (60, 64) für wenigstens eine weitere Welle (40, 43) des Stirnradgetriebes (16) aufweist.

4. Antriebsstrang nach einem der Ansprüche 1 bis 3, **dadurch gekennzeichnet, daß** die Lagerplatte (54) in Längsrichtung des Stirnradgetriebes (16) gesehen zwischen dem Differential (18) und dem Stirnradgetriebe (16) angeordnet ist.

5. Antriebsstrang nach Anspruch 1, **dadurch gekennzeichnet, daß** das Differential (18) in dem Getriebegehäuse (26) aufgenommen ist.

6. Verfahren zum Montieren eines Antriebsstranges (10), der ein Stirnradgetriebe (16), ein Differential (18) mit einem Zahnkranz (50) sowie ein zweiteiliges Gehäuse (24), das ein Getriebegehäuse (26) und ein weiteres Gehäuse (28) aufweist, aufweist, mit den Schritten:
- Bereitstellen des endseitig geschlossenen Getriebegehäuses (26);
- axiales Montieren des Stirnradgetriebes (16) in dem Getriebegehäuse (26);
- Montieren einer Lagerplatte (54) in dem Getriebegehäuse (26), an der sowohl ein Lager (56) für den Zahnkranz (50) des Differentials (18) als auch wenigstens ein Lager (58, 62) einer Abtriebswelle (41, 42) des Stirnradgetriebes (16) angeordnet ist;
- axiales Montieren des Differentials (18) und wenigstens eines Ritzels (48, 49), das mit dem Zahnkranz (50) in Eingriff steht, in dem Getriebegehäuse (26); und
- Festlegen des weiteren Gehäuses (28) an dem Getriebegehäuse (26) entlang einer einzelnen Dichtfläche (30).

## Claims

1. Drivetrain (10), in particular for front-transverse installation in motor vehicles, having a two-part housing (24) which has a transmission housing (26) and a further housing, between which housings is formed a single sealing surface, with the housing (24) serving to hold a spur gear transmission (16) and a differential (18) which has a toothed ring (50) which meshes with at least one pinion (48, 49) of a drive output shaft (41, 42) of the spur gear transmission (16), with a bearing (58, 62), which is assigned to the pinion (48, 49), of the drive output shaft (41, 42), and a bearing (56), which is assigned to the toothed ring (50) of the differential (18), being fixed to a bearing plate (54) which is mounted within the transmission housing (26),
**characterized in that**
the transmission housing (26) is embodied as a pot-shaped housing (26) which is closed off at the end side and in which the spur gear transmission is held.

2. Drivetrain according to Claim 1, **characterized in that** the two bearings (58, 62 or 56) on the bearing plate (54) lie in a plane which runs approximately perpendicular to the drive output shaft (41, 42) of the spur gear transmission (16).

3. Drivetrain according to Claim 1 or 2, **characterized in that** the bearing plate (54) has at least one further bearing point for fixing a bearing (60, 64) for at least one further shaft (40, 43) of the spur gear transmission (16).

4. Drivetrain according to one of Claims 1 to 3, **characterized in that** the bearing plate (54) is arranged, as viewed in the longitudinal direction of the spur gear transmission (16), between the differential (18) and the spur gear transmission (16).

5. Drivetrain according to Claim 1, **characterized in that** the differential (18) is held in the transmission housing (26).

6. Method for assembling a drivetrain (10) which has a spur gear transmission (16), a differential (18) with a toothed ring (50), and a two-part housing (24) which has a transmission housing (26) and a further housing (28), having the steps:
- providing the transmission housing (26) which is closed off at the end side;
- axially mounting the spur gear transmission (16) in the transmission housing (26);
- mounting a bearing plate (54) in the transmission housing (26), on which bearing plate (54) are arranged both a bearing (56) for the toothed ring (50) of the differential (18) and also at least one bearing (58, 62) of a drive output shaft (41, 42) of the spur gear transmission (16);
- axially mounting the differential (18) and at least one pinion (48, 49), which is in engagement with the toothed ring (50), in the transmission housing (26); and
- fixing the further housing (28) to the transmission housing (26) along a single sealing surface (30).

## Revendications

1. Train d'entraînement (10), en particulier pour le montage transversal avant dans des véhicules automobiles, comprenant un boîtier (24) en deux parties, qui présente un boîtier de boîte de vitesses (26) et un autre boîtier, entre lesquels est réalisée une surface d'étanchéité unique, le boîtier (24) servant à recevoir une transmission à engrenages droits (16) et un différentiel (18), qui présente une couronne dentée (50), qui s'engrène avec au moins un pignon (48, 49) d'un arbre de sortie (41, 42) de la transmission à engrenages droits (16), un palier (58, 62) de l'arbre de sortie (41, 42) associé au pignon (48, 49) et un palier (56) associé à la couronne dentée (50) du différentiel (18) étant fixés sur un plateau de palier (54), qui est monté à l'intérieur du boîtier de boîte de vitesses (26),
**caractérisé en ce que**
le boîtier de boîte de vitesses (26) est réalisé sous forme de boîtier en forme de pot fermé à l'extrémité (26), dans lequel est reçue la transmission à engrenages droits.

2. Train d'entraînement selon la revendication 1, **caractérisé en ce que** les deux paliers (58, 62, respectivement 56), sont situés sur le plateau de palier (54) dans un plan qui s'étend approximativement perpendiculairement à l'arbre de sortie (41, 42) de la transmission à engrenages droits (16).

3. Train d'entraînement selon la revendication 1 ou 2, **caractérisé en ce que** le plateau de palier (54) présente au moins un autre point de palier pour la fixation d'un palier (60, 64) pour au moins un autre arbre (40, 43) de la transmission à engrenages droits (16).

4. Train d'entraînement selon l'une quelconque des revendications 1 à 3, **caractérisé en ce que** le plateau de palier (54) est disposé, vu dans la direction longitudinale de la transmission à engrenages droits (16), entre le différentiel (18) et la transmission à engrenages droits (16).

5. Train d'entraînement selon la revendication 1, **caractérisé en ce que** le différentiel (18) est reçu dans le boîtier de la boîte de vitesses (26).

6. Procédé pour le montage d'un train d'entraînement (10) qui présente une transmission à engrenages droits (16), un différentiel (18) avec une couronne dentée (50) ainsi qu'un boîtier (24) en deux parties, qui présente un boîtier de boîte de vitesses (26) et un autre boîtier (28), comprenant les étapes suivantes :
- mise à disposition du boîtier de boîte de vitesses (26) fermé à l'extrémité,
- montage axial de la transmission à engrenages droits (16) dans le boîtier de boîte de vitesses (26) ;
- montage d'un plateau de palier (54) dans le boîtier de boîte de vitesses (26), sur lequel un palier (56) pour la couronne dentée (50) du différentiel (18) ainsi qu'au moins un palier (58, 62) d'un arbre de sortie (41, 42) de la transmission à engrenages droits (16) sont disposés ;
- montage axial du différentiel (18) et d'au moins un pignon (48, 49) qui est en prise avec la couronne dentée (50), dans le boîtier de boîte de vitesses (26) ; et
- fixation de l'autre boîtier (28) sur le boîtier de boîte de vitesses (26) le long d'une surface d'étanchéité unique (30).
